# EUROPEAN PATENT SPECIFICATION

(11) **EP 0 778 367 B1**
(45) Date of publication and mention of the grant of the patent: **20.09.2000**
(21) Application number: 96118246.6
(22) Date of filing: 14.11.1996
(51) Int. Cl.: D06F 35/00

(54) **Clothes washing machine with rinsing cycles using small amounts of water**
Wäschewaschmaschine mit Spülgängen die kleine Wassermengen benutzen
Machine à laver le linge avec des cycles de rinçage utilisant des petites quantités d'eau

(30) Priority: 06.12.1995 IT PN950064
(43) Date of publication of application: 11.06.1997
(73) Proprietor: Electrolux Zanussi S.p.A., 33170 Pordenone (IT)
(72) Inventor: Cimetta, Silvano, 31100 Treviso (IT); Babuin, Piero, 33170 Pordenone (IT)
(74) Representative: Giugni, Valter

(56) References cited:
- US-A- 3 388 410

## Description

The present invention refers to a clothes washing machine, in particular of the household type, provided with means to recirculate the liquor collecting in the bottom portion of the tub, which is adapted to make it possible for considerable savings to be obtained in the usage of fresh water in the rinsing phases.

The present invention applies equally well to both front-loading and top-loading types of washing machines, although the accompanying drawings illustrate, by mere way of example, a front-loading machine.

It is largely known that one of the major issues currently dealt with by design engineers and manufacturers of clothes washing machines, in particular those for household use, refers to the manners in which savings can be obtained in the usage of fresh water from the water supply mains. Household washing machines are also largely to be found in the field whose total water usage from approx. 50 litres to approx. 70 litres to handle a washload of approx. 5 kg.

Such a usage is due to the number of washing and rinsing cycles that are included in the regular washing programmes. Particularly spendthrift among these cycles, in terms of water usage, are certainly the rinsing ones since they are generally never less than three in number and also for the reason that there is a general tendency to abound in the actual amounts of water filled in to perform these cycles owing to the basic consideration that rinsing efficiency can be ragarded as being in a direct relation to the amount of water used.

In order to reduce water usage in general, various types of wasging machines have been proposed, among which in particular the so-called "recirculating" machines, wherein the liquor in the tub is lifted by a pump or similar means to be poured again on to the washload, as well as machines provided with a recovery reservoir that is used to recover the liquor which would otherwise be discharged from the machine and which, thanks to the provision of such a recovery reservoir, is on the contrary reused in one or more of the subsequent operation phases of the machine, preferably during a subsequent washing programme, when the quality of the liquor that must be filled in the tub is compatible with the quality of the previously recovered liquor stored in said reservoir.

However, the water saving effect that can be reached in recirculating machines is basically confined to the washing phases only of the process, whereas the mere fact of performing a recirculation of the liquor leaves the rinsing process substantially unaltered. Furthermore, the utilization of a recovery reservoir, with the various component parts that must be associated therewith in view of enabling it to operate regularly and correctly, calls for a massive redesign of the machine, which additionally turns out to be far more complex, expensive and, above all, much more sensitive in its use due to the need for the formation of degenerative processes (fermentation, bad or offensive smells, etc. ) in the mass of recovered liquor to be strictly avoided.

Since the effectiveness of a rinsing process substantially depends on the removal of washing liquor from the washload, ie. the dilution of the washing liquor in the rinsing water, if the rinsing effectiveness is to be improved it becomes practically mandatory to act on the two factors that are influencing such a process, ie. to increase either the amount of rinsing liquor or the number of rinsing phases or, ideally, both factors.

However, an increase of both said factors, while using fresh water from the mains in all cases, gives rise to a very elevated water usage, which on the contrary should be reduced as much as possible.

To this purpose, a repeated use of the same rinsing liquor would appear to be an obvious solution. However, such a liquor unavoidably becomes progressively contaminated by the preceding rinsing phases, so that the overall effectiveness of each one of said rinsing phases decreases progressively as the number of the times in which the rinsing liquor is reused increases.

This is a commonly known fact and, at the same time, the actual reason why there is a tendency to extend the duration of the rinses as much as possible, wherein a limit is however found in the maximum duration of the whole process.

It is also a common knowledge that the spin-extraction operation at the end of the rinse is instrumental in removing a considerable part of the liquor retained in the clothes due to capillarity effect, or mechanical reasons, and therefore removes a corresponding amount of detergent solution retained in the clothes. This practically enables the liquor used in the subsequent rinse to be contaminated to a lesser extent, with a better overall rinsing performance reached eventually.

Such an improvement, however, has a counter-effect in that it involves an increase in water usage since, if it is true that in each rinse performed with fresh water the clothes are rinsed effectively, it is laso true that the water used in each rinse is discharged from the machine when it is still scarcely contaminated, so that the end result is that water is wasted which could actually be reused to rinsing purposes.

It is also a common knowledge, and a common practice, to combine the utilization of the two above cited effects, ie. the removal of the detergent solution retained by the clothes through both a multiplication of the number of rinses and a mechanical removal of the detergent solution by spin-extraction at the end of each rinsing phase, in order to obtain the best possible result.

As already pointed out, however, this calls for the utilization of successive fresh water fillings.

In order to eliminate the afore cited drawback of having to "throw away" water that is still relatively clean, it would be possible for a same water filling to be used more than once by letting it flow, during the spin-extraction phases, into an appropriate recovery reservoir so as to allow for the tub to be entirely emptied for a correct spin-extraction effect.

Such an opportunity, however, clashes constructively with the necessity of providing a recovery reservoir of a certainly not unsignificant size to be associated to the machine along with appropriate delivery and return conduits with related pumps and accessory parts, so that the resulting machine will unavoidably be excessively expensive and complicated.

From US 3 388 410 it is known that the same result as described above can be obtained, with the utilization of a single rinsing bath, which is however used several times, and related spin-extraction cycles, wherein the bath is first removed from the tub and subsequently poured again onto the clothes, without this requiring any use of a recovery reservoir, liquor conveyances from a vessel into another one, the use of corresponding pumps, etc. This document discloses the features in the preamble of claim 1.

Said US patent consists of the utilization, in a recirculating-type machine, of certain volumes already available in the water-carrying circuit of the machine, but basically unused to such a purpose, which can therefore be exploited to act as a recovery reservoir of the above mentioned type, without therefore any need arising for the structure of the same machine to undergo any modification.

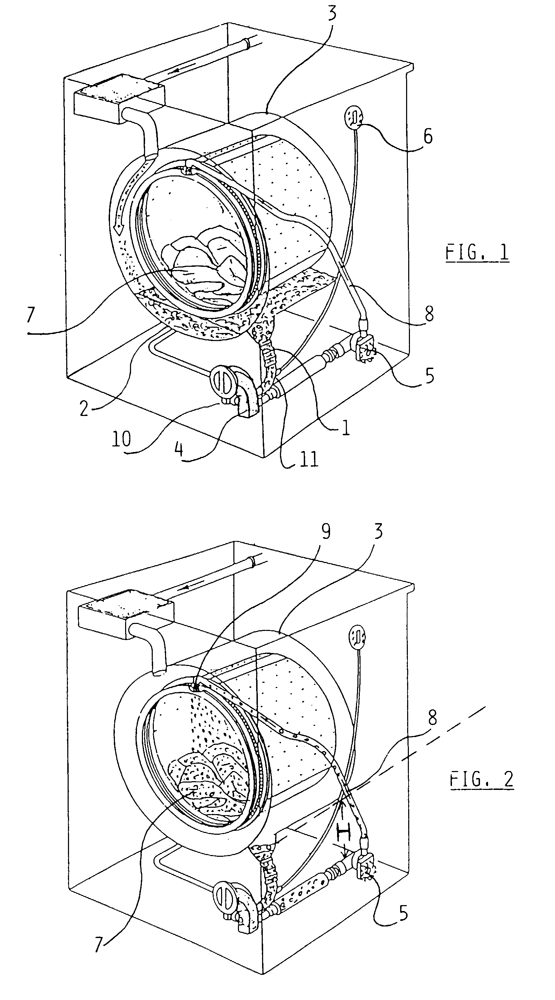

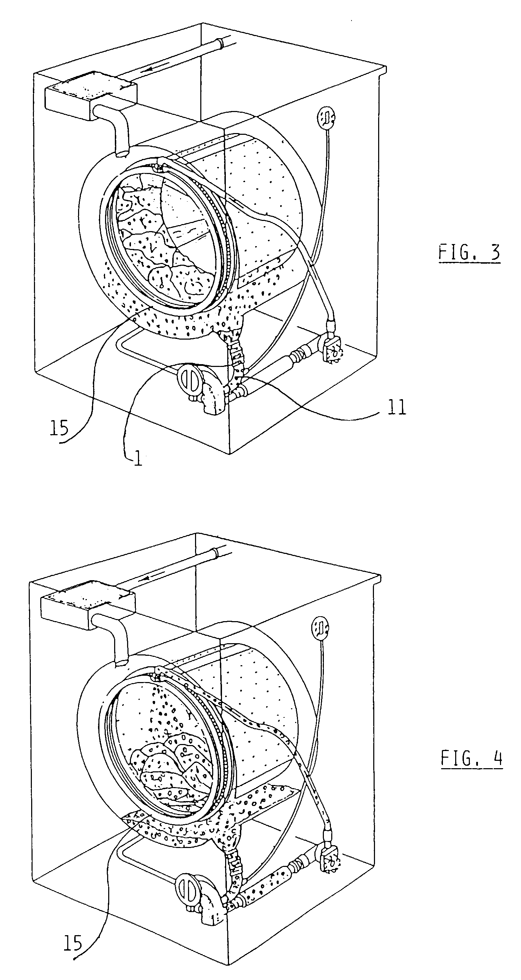

With reference to figures 1 to 4, showing the method of the prior art, such volumes are:
- a portion of the tub, namely that portion of the tub which is situated underneath the lower edge of the drum,
- the conduit 1 which from the bottom 2 of the tub 3 leads to the filter 4, arranged underneath the tub, and/or the recirculating pump 5, as this is illustrated schematically in the afore cited Figures.

Such a machine is by no way different in its construction from a normal recirculating-type machine; the only difference lies rather in the rinsing programme implemented and the utilization of the level control or pressure switch 6, as explained below.

At the beginning of the rinsing cycle, ie. phase 1, the machine (Fig. 1) fills in such an amount of fresh water as is capable of being entirely absorbed by the clothes 7, when the machine interrupts the water inlet. It should be emphasized that a pre-determined amount of water is actually filled in this phase, which is calculated so as to prove adequate to enable the washload to be entirely and thoroughly soaked therewith, without however this implying that, in such a phase, the water has necessarily to reach immediately the clothes, since it can be left on the bottom of the tub until it is circulated by the corresponding recirculation circuit that comprises the recirculation conduit 8.

Theoretically, the machine could fill in water to a level beyond such a limit. However, if after the clothes have been soaked in the above indicated manner the upper level of the bath in the tub is to lie underneath said edge, it is preferable and prudential for such a limit not to be exceeded.

The certainty that such amount of water is actually absorbed by the washload derives from the fact that the jet of water pumped by the recirculation pump 5 is sprayed onto the washload through an appropriate conduit 8 and a final nozzle 9, which is oriented towards the centre of the tub. Subsequently, ie. in the phase 2 (see Figure 2), the pump 5 is energized and the drum is driven to rotate at a low revolution speed so as to enable the whole of the washload to be wetted and soaked by the water filled into the machine, recirculated by the pump and sprayed against the washload. During this phase, the level of the liquor in the tub keeps lowering until it reaches down to a height H located just above the recirculating pump.

After a pre-determined period, the drum is then driven so as to start rotating at a high revolution speed for a few minutes (Figure 4). The purpose of this high-speed rotating operation of the drum is to rid the washload of the greater amount of rinsing water and, as a result, washing liquor, ie. detergent solution, contained therein.

At the end of this phase, the level of liquor in the tub remains below the lower edge 15 of the drum, thereby allowing for a high-speed spin-extraction to be carried out without any problem or difficulty whatsoever.

However it may happen that the water level be reduced almost to nothing, this fact clearly indicating that the liquor has been totally absorbed and the washload has not been completely saturated with liquor, which condition would unavoidably lead to a deterioration of the rinsing result.

The measurement of such a level comprises of course also the height of the water column in the conduit 1 between the bottom of the tub and the pressure detection point 11 of the pressure sensor 6.

The present invention lies in the possibility for the level of the liquor in the tub to be measured, after the first phase, in order to make sure that such a level does not amount practically to nothing.

In order to avoid such a drawback, after the first spin-extraction phase, and preferably also after all of the subsequent spin-extraction phases with the same rinsing liquor, the level of the liquor is measured automatically and if, as already set forth above, this level is not found to be in excess of a pre-set minimum level, although very low, a level restoring phase is automatically started, which consists in letting additional fresh water into the tub until its level reaches said minimum pre-set level.

## Claims

1. Clothes washing machine, particularly of the household type, comprising an outer casing, a washing tub (3), a cylindrically shaped perforated drum contained in said tub and adapted to rotate within said tub about the axis of the cylinder during washing and spin-extraction, a recirculating pump (5) provided to pump the liquor contained in a conduit (1) arranged below said tub, and connected to the bottom (2) of said tub, again towards the interior of said drum through an appropriate conduit (8) and a related spray nozzle (9) the bottom portion of said lower conduit (1) being connected to a pressure sensor (6) adapted to inform on the corresponding height of the column of liquor existing in said conduit, and at least a rinsing cycle, and provided with means that, in said at least a rinsing cycle, are adapted to:
a) initially fill a pre-determined amount of water into the tub (3),
b) operate the recirculating pump (5), which acts from the bottom of said lower conduit (1), for a definite period of time so as to enable said water to be fully pumped into the drum, while the drum is at the same time started to rotate at a low revolution speed,
c) start a spin-extraction cycle for a pre-definite period of time until a lower level of liquor is restored in the tub (3), said water initially filled in as described under a) above being let in in such an amount as to ensure that, at the end of the phase described under c) above, the upper edge of the liquor in the tub remains constantly below the lower edge of said drum; and that it is adapted to perform the operational modalities described under b) and c) for a pre-determined number of times,
**characterized in that**, after the short spin-extraction cycle according to c) above, a partial emptying of the tub is provided so as to cause the level of the liquor contained therein to lower until it almost touches, from the bottom, the lower edge of the drum, and that the level of the column of liquor is measured by said pressure sensor (6) and, should said column be found to be lower than a pre-set minimum level, additional water is filled into said tub (3) until the level of said column of liquor rises again to reach said pre-set minimum level.

## Patentansprüche

1. Wäschewaschmaschine, insbesondere für den Haushalt, welche umfaßt: Ein Außengehäuse, einen Waschbehälter (3), eine zylindrisch geformte durchbrochene Trommel, die im Waschbehälter angeordnet und so gestaltet ist, daß sie während des Waschens und Schleuderns innerhalb des Waschbehälters um die Zylinderachse rotiert, eine Umlaufpumpe (5), die vorgesehen ist, damit die Waschlauge, die in einer Leitung (1), welche unterhalb des Behälters angeordnet und mit der Unterseite (2) des Behälters verbunden ist, über eine geeignete Leitung (8) und eine damit verbundene Spritzdüse (9) erneut gegen das Innere der Trommel gepumpt wird, wobei der Bodenabschnitt der unteren Leitung (1) mit einem Drucksensor (6) verbunden ist, der so gestaltet ist, daß er über die Höhe der in der Leitung vorhandenen Laugensäule informiert, sowie mindestens einen Spülgang, welcher mit Mitteln versehen ist, die in dem mindestens einen Spülgang dazu dienen:
a) anfänglich eine vorbestimmte Menge Wasser in den Behälter (3) zu füllen,
b) die Umlaufpumpe (5), welche von der Unterseite der unteren Leitung (1) wirkt, während einer bestimmten Zeitdauer so zu betätigen, daß das Wasser vollständig in die Trommel gepumpt wird, während die Trommel gleichzeitig mit einer niedrigen Drehgeschwindigkeit zu rotieren beginnt,
c) einen Schleudergang für eine bestimmte Zeitdauer zu starten, bis ein unterer Laugenpegel in dem Behälter (3) wieder vorhanden ist, und das Wasser, welches anfänglich, wie zuvor unter a) beschrieben, eingefüllt wird, in einer solchen Menge einzulassen, daß am Ende der zuvor unter c) beschriebenen Phase der obere Laugenpegel in dem Behälter ständig unterhalb der Unterkante der Trommel bleibt; und daß die Steuerung so erfolgt, daß die unter a), b) und c) beschriebenen Funktionsabläufe in einer vorbestimmten Anzahl ausgeführt werden,
**dadurch gekennzeichnet, daß** nach dem kurzen Schleudergang entsprechend c) ein teilweises Entleeren des Behälters vorgesehen wird, bis der Pegel der darin enthaltenen Lauge soweit absinkt, daß er, von der Unterseite aus, beinahe die Unterkante der Trommel berührt, und daß der Pegel der Laugensäule durch den Drucksensor (6) gemessen wird, und, wenn die Säule niedriger ist als ein vorbestimmter minimaler Pegel, zusätzlich Wasser in den Behälter (3) gefüllt wird, bis der Pegel der Laugensäule erneut ansteigt, um den vorbestimmten minimalen Pegel zu erreichen.

## Revendications

1. Machine à laver le linge, en particulier du type domestique, comprenant une carcasse extérieure, une cuve de lavage (3), un tambour perforé de forme cylindrique contenu dans ladite cuve et adapté pour tourner à l'intérieur de ladite cuve autour de l'axe du cylindre lors du lavage et de l'essorage, une pompe de recyclage (5) prévue pour pomper l'eau de lessive contenue dans un conduit (1) agencé au-dessous de ladite cuve, et raccordée au fond (2) de ladite cuve, de nouveau vers l'intérieur dudit tambour au moyen d'un conduit adapté (8) et d'une buse de pulvérisation associée (9), la partie inférieure dudit conduit inférieur (1) étant raccordée à un capteur de pression (6) adapté pour indiquer la hauteur correspondante de la colonne d'eau de lessive présente dans ledit conduit, et au moins un cycle de rinçage, et munie de moyens qui, dans ledit au moins un cycle de rinçage, sont adaptés pour :
a) remplir tout d'abord la cuve (3) avec une quantité d'eau prédéterminée,
b) faire fonctionner la pompe de recyclage (5) qui agit depuis le bas dudit conduit inférieur (1), sur une période de temps définie afin de permettre à ladite eau d'être entièrement pompée dans le tambour, tandis que le tambour commence dans le même temps à tourner à une vitesse de rotation faible,
c) commencer un cycle d'essorage pendant une période de temps prédéfinie jusqu'à ce qu'un niveau inférieur d'eau de lessive soit rétabli dans la cuve (3),
ladite eau initialement injectée comme cela est décrit au point a) ci-dessus étant laissée à l'intérieur dans une quantité telle qu'elle garantisse qu'à la fin de la phase décrite au point c) ci-dessus, le bord supérieur de l'eau de lessive contenue dans la cuve reste constamment au-dessous du bord inférieur dudit tambour, et qu'elle est adaptée pour réaliser les modalités de fonctionnement décrites aux points a), b) et c) pendant un nombre de fois prédéterminé, caractérisée en ce que, après le cycle d'essorage court selon le point c) ci-dessus, une vidange partielle de la cuve est prévue pour abaisser le niveau de l'eau de lessive contenue à l'intérieur jusqu'à ce qu'elle touche presque, depuis le fond, le bord inférieur du tambour, et en ce que le niveau de la colonne d'eau de lessive est mesuré par ledit capteur de pression (6) et, si ladite colonne s'avère être inférieure à un niveau minimal prédéterminé, une quantité additionnelle d'eau est injectée dans la cuve (3) jusqu'à ce que le niveau de ladite colonne d'eau de lessive augmente de nouveau pour atteindre ledit niveau minimal prédéterminé.
